# FASCICULE DE BREVET EUROPEEN

(11) **EP 0 603 028 B1**
(45) Date de publication et mention de la délivrance du brevet: **10.03.1999**
(21) Numéro de dépôt: 93402943.0
(22) Date de dépôt: 06.12.1993
(51) Int. Cl.: C08L 95/00

(54) **Compositions bitume-polymère, leur procédé de préparation et leurs applications**
Bitumen-Polymer Zusammensetzungen, Verfahren zu deren Herstellung und Verwendung
Bitumen-polymer compositions, preparation method and application

(30) Priorité: 14.12.1992 FR 9215016
(43) Date de publication de la demande: 22.06.1994
(73) Titulaire: TOTAL RAFFINAGE DISTRIBUTION S.A., 92300 Levallois Perret (FR)
(72) Inventeur: Burel, Pierre, F-76620 Le Havre (FR); Jolivet, Yannick, F-76600 Le Havre (FR); Lemoine, Guy, F-76600 Le Havre (FR)
(74) Mandataire: Jolly, Jean-Pierre

(56) Documents cités:
- EP-A- 0 351 736
- EP-A- 0 384 254
- WO-A-91/18032
- US-A- 5 130 354

## Description

La présente invention concerne des compositions bitume-polymère, la préparation de celles-ci et leur application à la réalisation de revêtements bitumineux ayant des propriétés physiques améliorées.

Il est connu que le bitume peut être produit, notamment, à partir du pétrole brut par distillation de celui-ci et désasphaltage de la fraction lourde issue de la (ou les) distillation(s). Le bitume est constitué, selon l'origine du pétrole brut, de proportions variables d'huile paraffinique (aliphatique ou naphténique), aromatique, de résines et d'asphalténes (on peut se reporter à ce sujet au brevet EP 246 956, dont la Demanderesse est titulaire).

Selon sa constitution, le bitume peut présenter un caractère plus ou moins thermoplastique, il se ramollit sous l'effet de la chaleur, son point de ramollissement, appelé communément température "bille-anneau" en raison de la méthode utilisée pour le déterminer (conformément à la norme NFT 66008), pouvant varier selon le procédé d'obtention du bitume entre environ 30 et environ 130°C.

Ces températures peuvent être jugées insuffisantes pour certaines applications :
- risque de fluage à température élevée dans l'application à la réalisation de chapes d'étanchéité ;
- comportement élastique ;
- tenue de certains mastics en température lors de certains traitements (caisses d'automobile).

Parmi les techniques connues pour améliorer la tenue en température d'un bitume, on peut citer notamment :
1) L'oxydation du bitume par la technique de soufflage par de l'air à environ 250°C ; le produit ainsi obtenu peut présenter des températures "bille-anneau" élevées, est plus dur et plus cassant ;
2) La modification du bitume par incorporation de certains polymères, les températures "bille-anneau" du produit obtenu pouvant atteindre des valeurs de 120 à 150°C ; à cette température de 150°C, le produit obtenu présente de faibles propriétés élastiques ;
3) La modification du bitume par l'incorporation de polymères du type SBR (styrène-butadiène rubber) ou SBS (styrène-butadiène-styrène), vulcanisables à l'aide de soufre (ou donneurs de soufre) ou de peroxydes. Cette technique nécessite des températures élevées et parfaitement contrôlées pendant des temps relativement longs ; le produit ainsi obtenu présente une viscosité très élevée, difficilement compatible avec les procédés de mise en oeuvre de la profession. En outre, la vulcanisation lui apporte un caractère irréversible peu favorable à une mise en oeuvre aisée.

EP-A-351 736 décrit des compositions pour feuilles d'étanchéité contenant :
a) 100 parties d'un copolymère éthylène-oléfine (qui peut être un EPDM) greffé avec un silane et un peroxyde,
b) 10-200 parties de bitume.

Le polymère est d'abord greffé, puis on ajoute le bitume.

La Demanderesse a, au cours de ses travaux de recherche, mis au point des mélanges bitume-polymère, en évitant les différents inconvénients présentés par les produits obtenus par les procédés décrits ci-dessus.

Le but de la présente invention est donc l'obtention de produits bitumineux possédant à la fois une bonne tenue en température et conservant une viscosité compatible avec les techniques de mise en oeuvre, produits obtenus en outre par un procédé ne nécessitant qu'un apport d'énergie réduit.

A cet effet, l'invention a pour premier objet une composition bitume-polymère, caractérisée en ce qu'elle comprend :
a) au moins un bitume,
b) au moins un polymère présentant des chaînes hydrocarbonées à hydrogène mobile ou électron libre choisi dans le groupe constitué par :
   a) les polyoléfines,
   b) les caoutchoucs naturels ou synthétiques,
   c) le polychlorure de vinyle,
   d) les copolymères éthylène-acétate de vinyle,
   ledit polymère étant greffé et réticulé in situ dans ledit bitume par l'intermédiaire d'un complexe formé à partir d'un donneur de soufre et d'un silane choisi dans le groupe constitué par les chlorosilanes, les organochlorosilanes, les esters d'organosilane et les dérivés méthacryl, époxy, mercapto, amino de silane.

L'invention a également pour deuxième objet un procédé de préparation d'une composition comprenant :
a) au moins un bitume,
b) au moins un polymère présentant des chaînes hydrocarbonées à hydrogène mobile ou électron libre, ledit polymère étant greffé et réticulé in situ dans ledit bitume par l'intermédiaire d'un complexe d'au moins un composé organique du silicium, ledit complexe étant formé à partir d'un constituant primaire et d'un constituant secondaire, ce dernier étant le composé organique du silicium,
ce procédé étant caractérisé en ce qu'il comprend les étapes suivantes :
a) la réalisation d'un mélange sensiblement homogène à l'état fondu d'au moins un bitume et d'au moins un polymère présentant des chaînes hydrocarbonées à hydrogène mobile ou électron libre, ledit polymère étant éventuellement préalablement dissous dans un solvant, cette étape a) comprenant l'incorporation dans le mélange obtenu en a), maintenu à l'état fondu, des constituants primaire et secondaire précurseurs du complexe de greffage et réticulation du polymère, d'au moins un composé organique du silicium, éventuellement préalablement dissous dans la solution de polymère,
b) le maintien du produit obtenu en a), à l'état fondu, sous agitation, pendant une durée suffisante pour obtenir le greffage du complexe sur le polymère du composé organique du silicium formé en a)
c) la mise en forme à chaud du composé bitume-polymère obtenu en b) en vue de l'application envisagée,
d) le refroidissement dudit composé mis en forme, au contact d'eau en quantité suffisante, pendant une durée suffisante, pour provoquer la réticulation in situ du polymère greffé, par hydrolyse du complexe du silicium.

Les phases a) et b) du procédé sont effectuées de préférence en l'absence d'eau, pour éviter une réticulation prématurée.

Au sens de la présente invention, le bitume utilisable dans la composition bitume-polymère peut être un bitume qui sera appelé ci-après bitume "naturel", pour le différencier du bitume "synthétique" décrit plus loin. Ce bitume naturel est issu du pétrole brut, des schistes bitumineux, d'huiles lourdes, de sable bitumineux etc... ou même de charbon.

Le bitume peut être, par exemple :
a) la fraction la plus lourde obtenue par distillation directe sous pression atmosphérique ou sous pression réduite d'un pétrole brut ;
b) la phase lourde obtenue par désasphaltage au solvant d'une fraction lourde obtenue selon a) ;
c) le produit de l'oxydation, en présence ou non de catalyseurs, d'une fraction lourde selon a) ou d'une phase lourde selon b) ;
d) le produit de l'oxydation, en présence ou non de catalyseurs d'un mélange : d'une fraction lourde selon a) ou d'une phase lourde selon b) et
   - d'un distillat, ou
   - d'un extrait aromatique obtenu dans la désaromatisation des huiles lubrifiantes, ou
   - d'un brai de désasphaltage ;
e) un mélange d'un produit oxydé obtenu selon b) ou c) ou d'une base dure, et
   - d'un distillat, ou
   - d'un extrait aromatique obtenu dans la désaromatisation des huiles lubrifiantes, ou
   - d'un brai de désasphaltage, ou
   - d'une fraction lourde selon a) ou d'une phase lourde selon b) ;
f) une base viscoréduite, seule ou en mélange avec un des produits ci-dessus.

Le bitume utilisable peut être également un bitume synthétique ayant des caractéristiques voisines de celles d'un bitume "naturel" tel que décrit ci-dessus, par exemple les liants synthétiques clairs colorables par addition de pigments.

Il peut s'agir par exemple de résines de pétrole ou de résine indène-coumarone, en mélange avec des hydrocarbures aromatiques et/ou paraffiniques.

Les résines de pétrole peuvent être préparées par polymérisation d'hydrocarbures insaturés présents dans des fractions pétrolières insaturées, telles que les fractions obtenues par craquage thermique ou à la vapeur d'eau ou par pyrolyse.

Les résines indène-coumarone sont obtenues à partir des goudrons de houille.

La composition bitume-polymère peut contenir jusqu'à 25% en poids de polymère utilisé, de préférence de 3 à 15% en poids, en fonction de la nature du polymère et des qualités désirées pour l'utilisation visée.

La Demanderesse a utilisé ainsi avec succès de l'EPDM pouvant présenter un taux d'éthylène compris entre 45 et 80% en poids, une masse moléculaire en poids comprise entre 100.000 et 500.000 et un taux de monomère diène compris entre 1 à 10% en poids, ce monomère pouvant être par exemple de l'éthylidène norbornène, du dicyclopentadiène ou de l'hexadiène.

Le bitume est choisi, du point de vue de sa constitution, pour avoir une bonne compatibilité avec le polymère en adaptant les rapports hydrocarbures saturés, aromatiques et résines du bitume.

Sans que ce qui suit puisse avoir une incidence sur la brevetabilité de la présente invention, la Demanderesse estime que, dans la composition selon l'invention, le polymère sur lequel est greffé un complexe d'au moins un composé organique du silicium est ensuite réticulé par hydrolyse dudit composé.

Le complexe est lui-même formé d'un constituant primaire combiné à un constituant secondaire, le composé organique du silicium, qui sera appelé ci-après, par simplification, "silane", bien qu'il puisse contenir d'autres atomes que des atomes de silicium et d'hydrogène, des atomes d'oxygène par exemple.

Le constituant primaire, qui grefferait le constituant secondaire sur le polymère, peut être par exemple un composé donneur de soufre ou un peroxyde. Le composé du soufre se révèle plus performant et est préféré.

La Demanderesse a ainsi utilisé avec succès le tétrasulfure de dipentaméthylène thiurame. On peut également utiliser par exemple la 4.4' dithiodimorpholine.

Le silane utilisé sera choisi en fonction de sa masse moléculaire et de sa température d'ébullition. On pourra utiliser, par exemple, un chlorosilane tel que le trichlorosilane ; un organochloro silane, par exemple le vinyl-trichlorosilane, le méthyltrichlorosilane, le méthyldichlorosilane, le diméthyldichlorosilane ou le méthylvinyldichlorosilane ; un ester d'organosilane, tel que le méthyltriéthoxysilane ou le méthyltriméthoxysilane, le vinyltriméthoxysilane, le vinyl-tris (2-méthoxyéthoxy) silane ou le vinyltriacétoxysilane ; ou encore des dérivés méthacryl, époxy, mercapto, amino de silane. Parmi ces composés, le vinyl-tris (2-méthoxyéthoxy) silane se révèle particulièrement intéressant, compte tenu de sa température d'ébullition supérieure à 180°C.

Cette température est en effet importante, car la première étape du procédé de préparation de la composition bitume-polymère selon l'invention consiste à mélanger le polymère et le bitume à une température qui peut être comprise entre 150 et 230°C dans une enceinte de mélange dynamique avec rotor, pendant une durée qui peut être de 1 à 3 heures, pour obtenir une dispersion sensiblement homogène du polymère dans le bitume. L'enceinte de mélange peut être du type turbine Rayneri.

Le polymère peut être, avant le mélange, dissous dans un solvant, tel qu'un solvant aromatique, comme un extrait aromatique obtenu dans la préparation des bases lubrifiantes. Les composés primaire (donneur de soufre, par exemple), et secondaire (silane) sont incorporés simultanément ou successivement dans le mélange fondu de bitume et de polymère, que l'on maintient sous agitation pendant une durée suffisante pour obtenir un greffage du composé silanisé sur les chaînes polymères par l'intermédiaire du composé soufré.

Après addition des composés primaire et secondaire, le mélange résultant chaud, où le complexe de réticulation commence à se former, a une faible viscosité qui augmente avec le temps.

Quand le polymère est employé en solution dans un solvant, il est avantageux d'utiliser cette solution pour incorporer les composés primaire et secondaire, qui sont ainsi mieux dispersés et peuvent être employés à des concentrations plus faibles.

La cinétique de réticulation peut être accélérée par incorporation de catalyseurs, par exemple du type DLTDB (dilaurate de dibutylétain).

Le mélange est mis en forme en vue de l'application envisagée et mis en contact avec de l'eau, par exemple l'air ambiant humide. La réticulation du polymère greffé par hydrolyse du silane se produit alors et peut durer de quelques heures à plusieurs semaines, en fonction du degré hygrométrique et de la température ambiante.

La composition bitume-polymère réticulée obtenue a une température bille-anneau qui peut dépasser 100°C, et même 180°C, tout en ayant une bonne élasticité à cette température et en présentant une tenue satisfaisante, en particulier une pliabilité à froid inférieure ou égale à -20°C selon le critère UEATC (Union Européenne pour l'Agrément Technique dans la Construction).

La composition bitume-polymère conforme à l'invention est particulièrement bien adaptée aux utilisations dans lesquelles elle est exposée à l'atmosphère ambiante, notamment à la réalisation de chapes, de toitures ou de revêtements anti-corrosion, et ces utilisations constituent un autre objet de la présente invention.

Naturellement, les additifs usuels des compositions bitume-polymères tels que des charges minérales pourront être incorporés dans les compositions conformes à l'invention.

Les exemples suivants, qui n'ont pas de caractère limitatif, illustrent l'invention.

### EXEMPLE 1

Cet exemple concerne la préparation d'une composition A bitume-polymère selon l'invention.

On dispose :
- 1) d'un bitume d'origine pétrolière ayant les caractéristiques suivantes :
- pénétrabilité à 25°C en 1/10 mm (selon norme AFNOR 66004) : 200,
- point de ramollissement en °C (selon norme AFNOR 66008) : 40.
- 2) d'un EPDM ayant les caractéristiques suivantes :
- taux d'éthylène en masse : 50%,
- taux de diène en masse : 4%,
- taux de propylène en masse : 46%,
- masse moléculaire en masse : 210 000.

Le bitume (90% en masse) et l'EPDM (10% en masse) sont mélangés dans un mélangeur Rayneri, à 190°C, pendant 2 heures, au bout desquelles on obtient un mélange homogène.

On incorpore alors le système formant le complexe de greffage et de réticulation.
- silane : vinyl-tris (2-méthoxyèthoxy) silane : 3% en masse, par rapport au mélange bitume-polymère
- composé soufré : tétrasulfure de dipentaméthylène thiurame : 0,5% en masse par rapport au mélange bitume-polymère.

Le mélangeage est poursuivi pendant 30 mn à 190°C.

La composition A obtenue est façonnée en plaques de 2 mm d'épaisseur.

On détermine la température "bille-anneau" des plaques:
- après 7 jours, dans une atmosphère ayant un degré hygrométrique de 50% : 75°C,
- après 20 jours, dans une atmosphère ayant un degré hygrométrique de 50% : 128°C,
- après 20 jours, dans une atmosphère ayant un degré hygrométrique de 80% : 148°C.

Cet exemple montre bien que les compositions selon l'invention ont des températures "bille-anneau" élevées et possèdent donc une bonne tenue en température, permettant de les utiliser comme chapes pour toitures.

En comparaison, le mélange bitume-polymère initial non greffé et non réticulé a une température bille-anneau de seulement 75°C et qui n'augmente pas avec le temps.

### EXEMPLE 2

Cet exemple concerne la préparation d'une composition B selon l'invention.

Cette composition est préparée de la même façon et avec les mêmes produits de départ que la composition A de l'Exemple 1.

Par rapport à la composition A, on part de 85% en masse de bitume pour 15% en masse d'EPDM.

On détermine la température "bille-anneau" de plaques de 3 mm d'épaisseur de la composition B :
- après 2 jours dans une atmosphère ayant un degré hygrométrique de 80% : 149°C,
- après 3 jours dans une atmosphère ayant un degré hygrométrique de 80% : 172°C,
- après 43 jours dans une atmosphère ayant un degré hygrométrique de 80% : > 200°C.

La pliabilité à froid (PAF) selon le test UEATC est comprise entre - 25°C et - 30°C.

On remarque également que la température bille-anneau de la composition B augmente avec le temps (composition bille-anneau du mélange initial bitume-polymère : 90°C).

### EXEMPLE 3

Cet exemple concerne la préparation d'une composition C selon l'invention.

Cette composition C est préparée de la même façon et avec les mêmes produits de départ que A et B, mais on part de 95% en masse de bitume pour 5% en masse d'EPDM.

On étudie les propriétés amortissantes des compositions B et C, ainsi que d'un témoin T constitué par un mastic de polychlorure de vinyle plastifié.

On mesure le module élastique (ou de stockage) E' et le module E" visqueux (ou de perte) à l'aide du viscoélasticimètre METRAVIB.

Plus E'' est élevé, plus le produit est amortissant.

Les résultats figurent dans le Tableau I ci-après :

**TABLEAU I**

| | B | C | T |
|---|---|---|---|
| E'/E'' | 0,78 | 0,86 | 0,35 |
| E' | 8,5.10⁷ | 5,53.10⁷ | 1,04.10⁷ |
| E'' | 6,69.10⁷ | 3,24.10⁷ | 3,18.10⁶ |

- Fréquence : 7,8 H_{z}
- Température : 10°C.

Ce tableau montre que les compositions selon l'invention sont amortissantes.

### EXEMPLE 4

On part d'un bitume de synthèse constitué par le mélange d'une résine de pétrole et d'un extrait aromatique provenant de l'extraction des hydrocarbures aromatiques d'une base lubrifiante. La pénétrabilité du bitume de synthèse à 25°C est de 200 dixièmes de mm et sa température bille-anneau de 45°C.

Le bitume de synthèse (90% en masse) et l'EPDM utilisé dans les exemples précédents (10% en masse) sont mélangés pendant 2 heures à 180°C, puis on ajoute le même silane et le même composé soufré que dans l'Exemple 1 et dans les mêmes proportions.

On façonne des plaques d'épaisseur 2 mm.

A l'état initial, la température bille-anneau du mélange bitume-polymère est de 94°C. Après exposition pendant 30 jours à une atmosphère de degré hygrométrique de 80%, la température bille-anneau est supérieure à 200°C.

La composition selon l'invention a donc une température bille-anneau élevée, comme dans les Exemples 1 à 3.

## Revendications

1. Composition bitume-polymère, caractérisée en ce qu'elle comprend :
a) au moins un bitume,
b) au moins un polymère présentant des chaînes hydrocarbonées à hydrogène mobile ou électron libre choisi dans le groupe constitué par :
a) les polyoléfines,
b) les caoutchoucs naturels ou synthétiques,
c) le polychlorure de vinyle,
d) les copolymères éthylène-acétate de vinyle,
ledit polymère étant greffé et réticulé in situ dans ledit bitume par l'intermédiaire d'un complexe formé à partir d'un donneur de soufre et d'un silane choisi dans le groupe constitué par les chlorosilanes, les organochlorosilanes, les esters d'organosilane et les dérivés méthacryl, époxy, mercapto, amino de silane.

2. Composition selon la revendication 1, caractérisée en ce qu'elle comprend un bitume "naturel".

3. Composition selon la revendication 1, caractérisée en ce qu'elle comprend un bitume "synthétique".

4. Composition selon l'une des revendications 1 à 3, caractérisée en ce qu'elle comprend jusqu'à 25 parties en masse de polymère pour 75 parties en masse de bitume et de préférence de 3 à 15 parties en poids de polymère pour 97 à 85 parties en poids de bitume.

5. Composition selon l'une des revendications 1 à 4, caractérisée en que le donneur de soufre est le tétrasulfure de dipentaméthylène thiurame.

6. Composition selon l'une des revendications 1 à 5, caractérisée en ce que le silane est le vinyl-tris (2-méthoxyéthoxy) silane.

7. Composition selon l'une des revendications 1 à 6, caractérisée en ce que le polymère est un EPDM présentant un taux d'éthylène compris entre 45 et 80 % en masse, une masse moléculaire en masse comprise entre 100.000 et 500,000 et un taux de monomère diène compris entre 1 et 10 % en masse.

8. Procédé de préparation d'une composition comprenant :
a) au moins un bitume,
b) au moins un polymère présentant des chaînes hydrocarbonées à hydrogène mobile ou électron libre, ledit polymère étant greffé et réticulé in situ dans ledit bitume par l'intermédiaire d'un complexe d'au moins un composé organique du silicium, ledit complexe étant formé à partir d'un constituant primaire et d'un constituant secondaire, ce dernier étant le composé organique du silicium,
ledit procédé étant caractérisé en ce qu'il comprend les étapes suivantes :
a) la réalisation d'un mélange sensiblement homogène à l'état fondu d'au moins un bitume et d'au moins un polymère présentant des chaînes hydrocarbonées à hydrogène mobile ou électron libre, ledit polymère étant éventuellement préalablement dissous dans un solvant, cette étape a) comprenant l'incorporation dans le mélange obtenu en a), maintenu à l'état fondu, des constituants primaire et secondaire précurseurs du complexe de greffage et réticulation du polymère, d'au moins un composé organique du silicium, éventuellement préalablement dissous dans la solution de polymère,
b) le maintien du produit obtenu en a), à l'état fondu, sous agitation, pendant une durée suffisante pour obtenir le greffage du complexe sur le polymère du composé organique du silicium formé en a)
c) la mise en forme à chaud du composé bitume-polymère obtenu en b) en vue de l'application envisagée,
d) le refroidissement dudit composé mis en forme, au contact d'eau en quantité suffisante, pendant une durée suffisante, pour provoquer la réticulation in situ du polymère greffé, par hydrolyse du complexe du silicium.

9. Procédé selon la revendication 8, caractérisé en ce que le constituant primaire est un donneur de soufre ou un peroxyde.

10. Procédé selon l'une des revendications 8 et 9, caractérisé en ce que le constituant primaire est le tétrasulfure de dipentaméthylène thiurame.

11. Procédé selon l'une des revendications 8 à 10, caractérisé en ce que le silane est le vinyl-tris (2-méthoxyéthoxy) silane.

12. Procédé selon l'une des revendications 8 à 11, caractérisé en ce que le polymère est un EPDM présentant un taux d'éthylène compris entre 45 et 80 % en masse, une masse moléculaire en masse comprise entre 100.000 et 500.000 et un taux de monomère diène compris entre 1 et 10 % en masse.

13. Procédé selon l'une des revendications 8 à 12, caractérisé en ce que le mélange de bitume et de polymère est effectué à une température comprise entre 150 et 230°C.

14. Application des compositions selon l'une des revendications 1 à 7 ou obtenues par le procédé selon l'une des revendications 8 à 13, à la réalisation de revêtements bitumineux, caractérisée en ce que la composition bitume-polymère obtenue après refroidissement a une température "bille-anneau" supérieure à 100° C.

## Patentansprüche

1. Bitumen-Polymer-Zusamnensetzung, dadurch gekennzeichnet, daß sie die folgenden Bestandteile umfaßt:
a) mindestens ein Bitumen,
b) mindestens ein Polymer mit Kohlenwasserstoffketten mit beweglichem Wasserstoff oder freiem Elektron aus der aus nachstehenden Stoffen bestehenden Gruppe:
a) Polyolefinen,
b) natürlichem oder synthetischem Kautschuk,
c) Polyvinylchlorid,
d) Ethylen-Vinylacetat-Copolymerisat,
wobei das Polymer in situ im Bitumen durch einen Komplex gepfropft und vernetzt wird, der ausgehend von einem Schwefellieferanten und einem Silan aus der von Chlorsilanen, Organochlorsilanen, Organosilanestern und Methacryl-, Epoxid-, Merkapto-, Aminosilanderivaten bestehenden Gruppe gebildet wird.

2. Zusamnensetzung nach Anspruch 1, dadurch gekennzeichnet, daß sie ein "natürliches" Bitumen enthält.

3. Zusammensetzung nach Anspruch 1, dadurch gekennzeichnet, daß sie ein "synthetisches" Bitumen umfaßt.

4. Zusammensetzung nach irgendeinem der Ansprüche 1 bis 3, dadurch gekennzeichnet, daß sie bis zu 25 Nasseteile Polymer auf 75 Masseteile Bitumen und bevorzugt zwischen 3 und 15 Gewichtsteile Polymer auf 97 bis 85 Gewichtsteile Bitumen enthält.

5. Zusammensetzung nach irgendeinem der Ansprüche 1 bis 4, dadurch gekennzeichnet, daß es sich bei dem Schwefellieferanten um Dipentamethylen-Thiuram-Tetrasulfid handelt.

6. Zusammensetzung nach irgendeinem der Ansprüche 1 bis 5, dadurch gekennzeichnet, das es sich bei dem Silan um Vinyl-tris-(2-methoxyethoxy)-Silan handelt.

7. Zusammensetzung nach irgendeinen der Ansprüche 1 bis 6, dadurch gekennzeichnet, daß es sich bei dem Polymer um einen Ethylen-Propylen-Dien-Kautschuk mit einem Ethylenanteil zwischen 45 und 80 Masse-%, einer Molekularmasse mit einem Massenanteil zwischen 100.000 und 500.000 und einem Monomer-Dien-Anteil zwischen 1 und 10 Masse-% handelt.

8. Verfahren zur Herstellung einer Zusammensetzung mit den folgenden Bestandteilen:
a) mindestens einem Bitumen,
b) mindestens einem Polymer mit Kohlenwasserstoffketten mit beweglichem Wasserstoff oder freiem Elektron, wobei das Polymer an Ort und Stelle im Bitumen durch einen Komplex aus mindestens einer organischen Siliziumverbindung gepfropft und vernetzt wird und wobei der KompLex einen Primärbestandteil und einen Sekundärbestandteil umfaßt und es sich bei letzterem um die organische Siliziumverbindung handelt,
dadurch gekennzeichnet, daß zum Verfahren die folgenden Schritte gehören:
a) Herstellung eines im geschmolzenen Zustand weitgehend homogenen Gemisches aus mindestens einem Bitumen und mindestens einem Polymer mit Kohlenwasserstoffketten mit beweglichem Wasserstoff oder freiem ELektron, wobei das Polymer ggf. vorher in einem Lösungsmittel gelöst wird und wobei dieser Schritt a) die Einarbeitung in das nach a) hergestellte und im geschmolzenen Zustand gehaltene Gemisch von Primär- und Sekundärbestandteilen als Vorläufer des zum Pfropfen und Vernetzen des Polymers bestimmten Komplexes aus mindestens einer ggf. vorher in der Polymerlösung gelösten organischen Siliziumverbindung umfaßt,
b) Erhaltung des geschmolzenen Zustands des nach a) hergestellten Produkts durch Rührbewegung auf eine ausreichend lange Dauer, um auf dem Polymer die Pfropfung des aus der gemäß a) hergestellten organischen Siliziumverbindung bestehenden Komplexes zu bewirken, c) Warmverformung der nach b) hergestellten Bitumen-Polymer-Zusammensetzung entsprechend dem vorgesehenen Verwendungszweck,
d) Abkühlung der verformten Zusammensetzung durch Kontakt mit einer ausreichenden Menge wasser auf eine ausreichend lange Dauer, um die in-situ-Vernetzung des gepfropften Polymers durch Hydrolyse des Siliziumkomplexes herbeizuführen.

9. Verfahren nach Anspruch 8, dadurch gekennzeichnet, daß es sich bei dem Primärbestandteil um einen Schwefellieferanten oder ein Peroxid handelt.

10. Verfahren nach einem der Ansprüche 8 und 9, dadurch gekennzeichnet, daß es sich bei dem Primärbestandteil um Dipentamethylen-Thiuram-Tetrasulfid handelt.

11. Verfahren nach irgendeinem der Ansprüche 8 bis 10, dadurch gekennzeichnet, daß es sich bei dem Silan um Vinyl-tris-(2-methoxyethoxy)-Silan handelt.

12. Verfahren nach irgendeinem der Ansprüche 8 bis 11, dadurch gekennzeichnet, daß es sich bei dem Polymer um einen Ethylen-Propylen-Dien-Kautschuk mit einem Ethylenanteil zwischen 45 und 80 Masse-%, einer Molekularmasse mit einem Massenanteil zwischen 100.000 und 500.000 und einem Monomer-Dien-Anteil zwischen 1 und 10 Masse-% handelt.

13. Verfahren nach irgendeinem der Ansprüche 8 bis 12, dadurch gekennzeichnet, daß die Vermischung des Bitumens und des Polymers bei einer Temperatur zwischen 150 und 230°C erfolgt.

14. Verwendung der Zusammensetzungen nach irgendeinem der Ansprüche 1 bis 7 oder der nach dem Verfahren nach irgendeinem der Patentansprüche 6 bis 13 hergestellten Zusammensetzungen zum Aufbringen von Bitumenüberzügen, dadurch gekennzeichnet, daß die hergestellte Bitumen-Polymer-Zusammensetzung nach dem Abkühlen eine "Kugelring" Temperatur von über 100°C hat.

## Claims

1. A bitumen-polymer composition, characterised in that it comprises:
a) at least one bitumen,
b) at least one polymer having hydrocarbon chains with mobile hydrogen or free electrons selected from the group comprising:
a) the polyolefins,
b) natural or synthetic rubbers,
c) polyvinyl chloride,
d) ethylene acetate vinyl copolymers,
said polymer being grafted and cross-linked in situ in said bitumen by means of a complex formed starting from a sulphur donor and a silane selected from the group comprising the chlorosilanes, the organochlorosilanes, the organosilane esters and the methacrylic, epoxy, mercapto or amino derivatives of silane.

2. A composition according to claim 1, characterised in that it comprises a "natural" bitumen.

3. A composition according to claim 1, characterised in that it comprises a "synthetic" bitumen.

4. A composition according to any one of claims 1 to 3, characterised in that it comprises up to 25 parts by weight of polymer per 75 parts by weight of bitumen, and, preferably, from 3 to 15 parts by weight of polymer per 97 to 85 parts by weight of bitumen.

5. A composition according to any one of claims 1 to 4, characterised in that the sulphur donor is dipentamethylene thiuram tetrasulphide.

6. A composition according to any one of claims 1 to 5, characterised in that the silane is vinyl-tris (2-methoxyethoxy) silane.

7. A composition according to any one of claims 1 to 6, characterised in that the polymer is an EPDM having a proportion of ethylene of between 45 and 80 % by weight, a molecular mass by weight of between 100,000 and 500,000 and a proportion of diene monomer of between 1 and 10 % by weight.

8. A method of preparing a composition comprising:
a) at least one bitumen,
b) at least one polymer having hydrocarbon chains with mobile hydrogen or free electrons, said polymer being grafted and cross-linked in situ in said bitumen by means of a complex of at least one organic compound of silicon, said complex being formed starting from a primary constituent and a secondary constituent, the latter being the organic compound of silicon,
said method being characterised in that it comprises the following steps:
a) forming a substantially homogeneous mixture in the molten state of at least one bitumen and of at least one polymer having hydrocarbon chains with mobile hydrogen or free electrons, said polymer being optionally previously dissolved in a solvent, said step a) comprising incorporating into the mixture obtained in a), maintained in the molten state, primary and secondary constituents which are precursors of the polymer grafting and cross-linking complex, of at least one organic compound of silicon optionally previously dissolved in the polymer solution,
b) maintaining the product obtained in a) in the molten state, with agitation, for a sufficient time to bring about the grafting of the complex on the polymer of the organic compound of silicon formed in a),
c) hot forming of the bitumen-polymer compound obtained in b) for the intended application,
d) cooling said formed compound in contact with a sufficient quantity of water for sufficient time to bring about the cross-linking in situ of the grafted polymer by hydrolysis of the silicon complex.

9. A method according to claim 8, characterised in that the primary constituent is a sulphur donor or a peroxide.

10. A method according to either one of claims 8 and 9, characterised in that the primary constituent is dipentamethylene thiurame tetrasulphide.

11. A method according to any one of claims 8 to 10, characterised in that the silane is vinyl-tris (2-methoxyethoxy) silane.

12. A method according to any one of claims 8 to 11, characterised in that the polymer is an EPDM having a proportion of ethylene of between 45 and 80 % by weight, a molecular mass by weight of between 100,000 and 500,000 and a proportion of diene monomer of between 1 and 10 % by weight.

13. A method according to any one of claims 8 to 12, characterised in that the mixing of bitumen and polymer is carried out at a temperature of between 150 and 230°C.

14. Application of the compositions according to any one of claims 1 to 7 or obtained by the method according to any one of Claims 8 to 13 to the production of bituminous coatings, characterised in that the bitumen-polymer composition obtained after cooling has a "ball-ring" temperature higher than 100°C.
